# EUROPEAN PATENT APPLICATION

(11) **EP 4 043 409 A1**
(43) Date of publication of application: **17.08.2022**
(21) Application number: 22155989.1
(22) Date of filing: 09.02.2022
(51) Int. Cl.: C02F 9/00, C02F 3/12, C02F 1/20, C02F 1/66

(54) **PROCESS AND CORRESPONDING PLANT FOR THE REMOVAL AND RECOVERY OF AMMONICAL NITROGEN FROM NITROGEN-CONTAINING WASTEWATER**

(30) Priority: 10.02.2021 IT 202100002915
(71) Applicant: Università Degli Studi Di Verona, 37129 Verona (IT)
(72) Inventor: FRISON, Nicola, 37038 Soave (Verona) (IT); CONCA, Vincenzo, 37136 Verona (IT); BOLZONELLA, David, 37122 Verona (IT)
(74) Representative: Biggi, Cristina

(57) **Abstract**

The present invention fits into in the field of wastewater treatment and relates to a process and an associated plant for the removal and simultaneous recovery of ammoniacal nitrogen from a liquid stream containing nitrogen in the form of ammoniacal nitrogen, said ammoniacal nitrogen being recovered in the form of gaseous NO, gaseous NO₂, nitric acid and/or ammonium nitrate.

## Description

### FIELD OF THE INVENTION

The present invention fits into in the field of purification of waste material in a liquid state and relates to a process and associated plant for the removal and simultaneous recovery of the ammoniacal nitrogen contained in waste materials, more particularly in liquid waste in general, said ammoniacal nitrogen being recovered in the form of gaseous nitrogen oxides (NO and NO₂), nitric acid and/or ammonium nitrate.

### PRIOR ART

Waste, for example, liquid waste originating from the treatment of wastewater, sewage sludge, organic fractions of solid municipal waste, agro-industrial waste and/or other liquid waste such as, for example, landfill leachates, may contain concentrations of nitrogen in the form of ammoniacal nitrogen (NH₄⁺) that are relatively high and in general greater than 300 mg(N-NH₄⁺)/L. Typically, all of these waste materials are treated by means of conventional, completely biological processes in dedicated treatment plants, where autotrophic biomasses (comprising ammonia-oxidising bacteria AOB, and nitrite-oxidising bacteria NOB) oxidise, in the presence of oxygen, ammoniacal nitrogen (NH₄⁺) first to nitrite (NO₂⁻) and then to nitrate (NO₃⁻). In a subsequent anoxic phase, the nitrogen, prevalently in the form of NO₃⁻, is converted to inert molecular nitrogen (N₂) by heterotrophic bacteria using a rapidly biodegradable carbon source, typically consisting of volatile fatty acids. However, this carbon source is rarely already available within the material to be treated and, therefore, it is necessary to administer it externally, thus further increasing the costs of treatment. This type of process enables the removal of ammoniacal nitrogen with typical conversion efficiency values ranging between 70 and 90%. The ammoniacal nitrogen that is not converted to nitrogen N₂ remains in part as a residue and in the sewage sludge as a biological reaction product.

An alternative method to the previous one provides for the use of completely biological processes that exploit the metabolism of specific autotrophic microorganisms for the conversion of ammoniacal nitrogen (N-NH₄⁺) to inert molecular nitrogen (N₂), without the use of a rapidly biodegradable carbon source. This type of process (including, for example, the ANAMMOX, DEMON, OLAND, ESSDE or ANITAMOX processes) are generally defined as deammonification processes and, in recent years, they have increasingly attracted the interest of companies operating in the sector of water and wastewater treatment and in the treatment of both liquid and solid waste in general. Such processes provide for a first step comprising the conversion of ammoniacal nitrogen (N-NH₄⁺) into the form of nitrite-nitrogen (N-NO₂⁻) through AOB-mediated aerobic processes. Nitrate formation is inhibited by applying operating conditions (such as, for example, hydraulic retention times) which preclude the anabolic activity of NOB. The ammoniacal nitrogen (N-NH₄⁺) is partially converted to NO₂⁻ with conversion efficiencies such as to obtain a mixture with a nitrogen ratio by weight (N-NO₂⁻):(N-NH₄⁺) of about 50:50. In a second step, particular autotrophic bacteria dedicated to the deammonification process enable the conversion of said (N-NO₂⁻):(N-NH₄⁺) mixture to inert molecular nitrogen (N₂), without the aid of a rapidly biodegradable carbon source. The overall stoichiometry of the biological reaction provides for up to 89% conversion of the ammoniacal nitrogen (N-NH₄⁺) to inert molecular nitrogen (N₂). The ammoniacal nitrogen that is not converted to inert molecular nitrogen is converted in part to nitrate (about 11%) and sewage sludge as by-products of the biological reaction. In the light of the foregoing, it appears clear that none of the processes listed provides for an effective recovery of nitrogen in reusable products and/or products having a commercial value. In fact, such methods envisage that the inert molecular nitrogen (N₂) obtained following the conversion of ammoniacal nitrogen will then be released into the atmosphere. Moreover, the main processes for the recovery of nitrogen from waste liquids such as wastewater and/or liquid waste in general provide for stripping of the ammoniacal nitrogen and the simultaneous recovery thereof as ammonium sulphate or ammonium phosphate. The process is mainly applied for liquids such as wastewater and/or liquid waste containing nitrogen at concentrations generally greater than 1500 mgN/L.

Thus, in the sector there remains a need to provide a process for the removal and effective recovery and reuse of ammoniacal nitrogen from a liquid phase containing nitrogen in the form of ammoniacal nitrogen which does not require the use of an external carbon source and at the same time allows the ammoniacal nitrogen to be recovered in the form of products that can be used and/or marketed in different sectors.

The present invention solves the problems of the prior art, in particular the problems related to the use of an external carbon source and/or the disposal of N₂, by providing a process and an associated plant which enables the effective removal and simultaneous recovery of ammoniacal nitrogen from a liquid phase containing nitrogen in the form of ammoniacal nitrogen without the use of an external carbon source and without the production of waste products that need to be disposed of and/or released into the atmosphere. The process and the associated plant according to the present invention make it possible, in fact, to recover the ammoniacal nitrogen, not in a further waste product that needs to be disposed of, burned or further processed, but in the form of gaseous nitrogen oxides (NO and NO₂), nitric acid and/or ammonium nitrate, i.e. products that can be directly used for commercial purposes in various technological sectors, such as, for example, the sector of inorganic fertilisers, the chemical industry, the pharmaceutical industry, etc.

### SUMMARY OF THE INVENTION

The present invention relates to a process for the removal and simultaneous recovery of the ammoniacal nitrogen (N-NH₄⁺) contained in a liquid phase. The process according to the present invention provides for the recovery of said ammoniacal nitrogen in the form of gaseous nitrogen oxides (NO and NO₂), nitric acid and/or ammonium nitrate. According to one embodiment, the process according to the present invention comprises a step of subjecting said liquid phase to a nitrification treatment under aerobic conditions, wherein the ammoniacal nitrogen is converted into nitrite-nitrogen (N-NO₂⁻) through the action of ammonia-oxidising bacteria (AOB). Said treatment makes it possible to obtain a mixture comprising ammoniacal nitrogen (N-NH₄⁺) and nitrite-nitrogen (N-NO₂⁻) in a ratio by weight of nitrogen (N-NO₂⁻):(N-NH₄⁺) comprised between 40:60 and 95:5. In a subsequent step, the process according to the present invention comprises a step of acidifying said mixture and flushing it with a gas comprising oxygen until obtaining a gaseous phase comprising gaseous nitrogen oxides (NO and NO₂) and a treated liquid phase.

According to another embodiment, the process according to the present invention comprises an additional step of hydrating, in the presence of oxygen, said gaseous phase comprising said gaseous nitrogen oxides (NO and NO₂) until obtaining a solution of nitric acid.

According to a further embodiment, the process according to the present invention comprises carrying out said nitrification treatment under aerobic conditions until obtaining a mixture comprising ammoniacal nitrogen (N-NH₄⁺) and nitrite-nitrogen (N-NO₂⁻) in a ratio by weight of nitrogen (N-NO₂⁻):(N-NH₄⁺) comprised between 40:60 and 55:45, mixing the liquid phase obtained after the acidification and flushing step with the solution of nitric acid obtained after the hydration step, and stripping the ammoniacal nitrogen contained in said liquid phase until obtaining a solution of ammonium nitrate.

The present invention also relates to a plant for carrying out the aforesaid process and for recovering said ammoniacal nitrogen in the form gaseous nitrogen oxides (NO and NO₂), nitric acid and/or ammonium nitrate.

### BRIEF DESCRIPTION OF THE FIGURES

Figure 1 shows a diagram of the plant comprising the reactor (A) and the reactor (B) according to a first embodiment of the present invention.
Figure 2 shows a diagram of the plant comprising the reactor (A), the reactor (B) and the condenser (D) according to a second embodiment of the present invention.
Figure 3 shows a diagram of the plant comprising the reactor (A), the reactor (B), the condenser (D) and the reactor (E) according to a third embodiment of the present invention.
Figure 4 shows the profile of the nitric and nitrite nitrogen during the stripping process as described in the examples section (Step B: stripping and hydration of NO₂ vapours).

### DETAILED DESCRIPTION OF THE INVENTION

For the purposes of the present invention, the "liquid phase containing ammoniacal nitrogen" is to be considered as a waste material.

According to a preferred embodiment of the invention, said liquid phase containing ammoniacal nitrogen is selected in the group consisting of: waste, liquid waste, a liquid waste originating from the treatment of wastewater, sewage sludge, a digestate, an organic fraction deriving from municipal solid waste, an agro-industrial waste material, a landfill leachate, and a combination thereof. For the purposes of the present invention said liquid phase is to be understood as a liquid phase which may comprise solids (e.g. particulates, solid waste, etc.) dispersed or suspended therein. For the purposes of the present invention, the acronym COD stands for chemical oxygen demand and represents the amount of oxygen that is theoretically necessary for the complete chemical oxidation of the organic and inorganic compounds present in the liquid phase to be treated.

For the purposes of the present invention, the terms "in connection" and "in communication" or "linked" and "connected", are used as perfectly interchangeable synonyms.

For the purposes of the present invention, the terms "liquid stream" and "liquid phase", as well as the terms "gaseous stream" and "gaseous phase", are used as perfectly interchangeable synonyms unless specified otherwise.

For the purposes of the present invention, the expression "ammoniacal nitrogen" refers to nitrogen in the form of the ammonium ion NH₄⁺ (when in solution, "N-NH₄⁺").

For the purposes of the present invention, the expression "nitrite-nitrogen" refers to nitrogen in the form of the nitrite ion NO₂⁻ (when in solution, "N-NO₂⁻").

The present invention relates to a process for the removal and recovery of ammoniacal nitrogen from a nitrogen-containing liquid phase.

According to a first embodiment, said process comprises the steps of:
(a) providing a liquid phase containing ammoniacal nitrogen (N-NH₄⁺) and subjecting it to a nitrification treatment in the presence of activated sludge comprising ammonia-oxidising bacteria (AOB) until obtaining a mixture comprising ammoniacal nitrogen (N-NH₄⁺) and nitrite-nitrogen (N-NO₂⁻), in a ratio by weight (N-NO₂⁻):(N-NH₄⁺) comprised between 40:60 and 95:5, preferably between 50:50 and 85:15;
   said treatment being carried out under aerobic conditions, maintaining the concentration of oxygen in said liquid phase at a value greater than 0.5 mg/L, and, preferably, maintaining the pH of said liquid phase at a value comprised between 7 and 8.5 by adding a base as a source of alkalinity;
(b) acidifying, by adding an acid, said mixture comprising ammoniacal nitrogen (N-NH₄⁺) and nitrite-nitrogen (N-NO₂⁻) to a pH comprised between 2 and 5.5 and, simultaneously, flushing said mixture with a gas comprising oxygen until obtaining a gaseous phase comprising NO and NO₂ according to the reactions:

   NO₂⁻ + H⁺ ←→ HNO₂

   2HNO₂ → NO₂ + NO + H₂O
(c) separating said gaseous phase from the treated liquid phase.

For the purposes of the present invention said step (c) of separating said gaseous phase from said treated liquid phase is a step in which the effective removal and recovery of ammoniacal nitrogen initially contained in the liquid phase to be treated of step (a) takes place. According to the above-described embodiment wherein the process of the present invention comprises steps (a)-(c), the ammoniacal nitrogen is removed and recovered in the form of a gaseous phase comprising NO and NO₂, which is separated from the treated liquid phase.

In other words, step (c) of the process according to the present invention is a step of separating said gaseous phase from the treated liquid phase, thereby obtaining said gaseous phase comprising NO and NO₂ and, therefore, in fact, (removing and) recovering the ammoniacal nitrogen in the form of gaseous NO and NO₂ contained in said gaseous phase.

For the purposes of the present invention, concentration of oxygen means the concentration of dissolved oxygen maintained during the nitrification process. Said concentration of oxygen is preferably maintained at a value comprised between 0.5 mg/L and 4.0 mg/L, more preferably between 1.0 mg/L and 4.0 mg/L.

Said concentration of oxygen is preferably maintained at the aforesaid values by flushing said liquid phase containing ammoniacal nitrogen with an oxygen-containing gas, said gas preferably being air or pure oxygen. According to a preferred embodiment, step (a) is carried out while maintaining said liquid phase containing ammoniacal nitrogen at a temperature comprised between 20 and 35 °C, preferably at a temperature of about 25 °C.

For the purposes of the present invention, said nitrification treatment in the presence of activated sludge comprising ammonia-oxidising bacteria (AOB) is definable as a biological nitrification treatment.

For the purposes of the present invention, said nitrogen-containing liquid phase provided in step (a), prior to the nitrification treatment, is also defined as "liquid phase to be treated".

According to one embodiment, said liquid phase to be treated is selected in the group consisting at least of: waste, liquid waste, liquid waste originating from the treatment of wastewater, sewage sludge, a digestate, an organic fraction deriving from municipal solid waste, an agro-industrial waste material, a landfill leachate, and a combination thereof.

According to a preferred embodiment, the liquid phase to be treated according to the process of the present invention comprises nitrogen in the form of ammoniacal nitrogen (N-NH₄⁺), in an initial concentration greater than 300 mg(N-NH₄⁺)/L, preferably comprised between 300 and 1500 mg(N-NH₄⁺)/L or greater, said liquid phase being defined, for the purposes of the present invention, as a liquid phase with a high nitrogen content. Said liquid phase to be treated preferably has a pH value comprised between 7 and 8.5, more preferably between 7.5 and 8.5.

Said liquid phase to be treated is preferably characterised by a COD/(N-NH₄⁺) ratio comprised between 1.5 and 3.0 gCOD/g(N-NH₄⁺).

Step (a) of the process according to the present invention is preferably carried out in a reactor that comprises said activated sludge comprising ammonia-oxidising bacteria (AOB).

Said activated sludge preferably comprises an autotrophic biomass comprising the aforesaid ammonia-oxidising bacteria (AOB).

According to a preferred embodiment, the dwell time of said bacteria inside said reactor is longer than 15 days, preferably comprised between 12 and 25 days.

More preferably, said step (a) is carried out by operating with volumetric loads of ammoniacal nitrogen greater than 0.5 kg(N-NH₄⁺)/m³ reactor per day, preferably comprised between 1.4 and 1.7 kg(N-NH₄⁺)/m³ reactor per day.

Without wishing to be bound to a specific theory, the Applicant has found that the oxygen concentration conditions of step (a) and, preferably, the pH and/or temperature conditions and/or volumetric loads of ammoniacal nitrogen supplied daily to the reactor, and/or the dwell time of said bacteria inside the reactor, make it possible to create conditions that are particularly conducive to the growth of AOB and simultaneously unfavourable for the growth of NOB. This enables an optimal conversion of ammoniacal nitrogen into nitrite-nitrogen to be obtained while hindering the subsequent conversion of nitrite-nitrogen into nitric nitrogen, which would occur in the presence of NOB.

Step (a) advantageously enables the ammoniacal nitrogen contained in said liquid phase to be converted into nitrite-nitrogen with conversion efficiency values comprised between 40 and 95% by weight, preferably between 50% and 85% by weight of ammoniacal nitrogen (N-NH₄⁺) converted into nitrite-nitrogen (NO₂⁻), thus obtaining, downstream of step (a), a mixture comprising ammoniacal nitrogen (N-NH₄⁺) and nitrite-nitrogen (NO₂⁻) in a ratio by weight (NO₂⁻):(N-NH₄⁺) comprised between 40:60 and 95:5, preferably between 50:50 and 85:15.

Without wishing to be bound to a specific theory, it is possible to maintain that such efficiency values can be adjusted according to the reaction conditions under which the nitrification treatment takes place, preferably according to the base amount preferably added in step (a), i.e. according to the pH value of said liquid phase during the nitrification treatment. According to one embodiment, the process according to the present invention makes it possible to obtain a conversion efficiency that is greater than 85%, preferably between 85 and 95% by weight of N-NH₄⁺ converted into NO₂⁻ (i.e. to obtain, downstream of step (a), a mixture comprising NH₄⁺ and NO₂⁻- in a ratio by weight (NO₂⁻):(N-NH₄⁺) greater than 85:15, preferably comprised between 85:15 and 95:5), preferably maintaining the pH of said liquid phase at a value comprised between 7.5 and 8.2 during the nitrification treatment.

According to one embodiment, the process according to the present invention makes it possible to obtain a conversion efficiency comprised between 40% and 55% by weight, preferably about 50% by weight of N-NH₄⁺ converted into NO₂⁻ (i.e. to obtain, downstream of step (a), a mixture comprising N-NH₄⁺ and NO₂⁻- in a ratio by weight (NO₂⁻):(N-NH₄⁺) comprised between 40:60 and 55:45, preferably about 50:50), preferably maintaining the pH of said liquid phase at a value comprised between 6.0 and 7.5 during the nitrification treatment by adding a base.

Said base added in step (a) is preferably selected in the group consisting of sodium hydroxide and/or calcium hydroxide.

Said oxygen-containing gas of step (b) is preferably selected from: air or pure oxygen.

The pH obtained in step (b) is preferably comprised between 2 and 4; more preferably it is about 4.5.

Said acid added in step (b) is preferably selected in the group consisting of sulphuric acid and/or hydrochloric acid.

Step (b) is preferably carried out at a temperature comprised between 25 and 35 °C.

Without wishing to be bound to a specific theory, it is possible to observe that the pH conditions of step (b) allow an effective shifting of the reaction equilibrium towards the formation of free nitrous acid:

NO₂⁻ + H⁺ ←→ HNO₂

The relative concentration of free nitrous acid mainly depends, in fact, on the pH and temperature according to the following equation:

[HNO_{2]} = NO₂⁻ / Kn · 10^{pH}

with Kn= exp[-2300/(273+T)]
T= temperature (K)
Kn = ionisation constant for nitrous acid (Kn=10^{-3.4} at 25 °C).

Since free nitrous acid is a highly unstable acid, it is decomposed into nitrogen oxide (NO) and nitrogen dioxide (NO₂) gas and water according to the following reaction:

2HNO₂ → NO₂ + NO + H₂O

According to one embodiment, the treated liquid phase separated in step (c) is characterised by having a reduced content of nitrogen in the form of ammoniacal nitrogen compared to the initial value before step (a), in a reduction percentage comprised between 40 and 95% by weight; said reduction percentage of ammoniacal nitrogen being correlated with the above-described conversion efficiency percentage.

The treated liquid phase separated in step (c) preferably comprises nitrogen in the form of ammoniacal nitrogen (N-NH4⁺), in a concentration comprised between 45 and 550 mg(N-NH₄⁺)/L, preferably between 45 and 450 mg(N-NH4⁺)/L, more preferably between 45 and 150 mg(N-NH₄⁺)/L.

According to one embodiment, after step (c), said treated liquid phase is separated from the bacteria and clarified by gravity sedimentation until a clarified liquid phase is obtained.

According to one embodiment, the process according to the present invention essentially consists or consists of the above-described steps (a)-(c).

According to another embodiment of the invention, the above-described process further comprises, after step (c), a step of:
(d) subjecting the gaseous phase comprising NO and NO₂ separated in step
(c) to hydration, in the presence of oxygen, until obtaining a solution of nitric acid, according to the reactions:

   3NO₂ + H₂O → 2HNO₃ + NO

   2NO + O₂ → 2NO₂

Said hydration is preferably carried out by hydrating said gaseous phase comprising NO and NO₂ with water.

For the purposes of the present invention, said step (d) is a step in which the removal and recovery of ammoniacal nitrogen in the form of a solution of nitric acid takes place. In other words, according to the above-described embodiment wherein the process of the present invention comprises steps (a)-(d), the ammoniacal nitrogen initially present in the liquid phase to be treated of step (a) is (removed and) recovered in the form of a solution of nitric acid, by subjecting the gaseous phase comprising NO and NO₂ separated in step (c) to hydration in the presence of oxygen.

Without wishing to be bound to a specific theory, the Applicant has found that step (b) of flushing the mixture subjected to acidification with a gas comprising oxygen is particularly advantageous for the purposes of step (d), since the presence of O₂ within the gaseous phase comprising NO and NO₂ makes it possible to obtain a complete oxidation of NO to NO₂, thus resulting in a gaseous phase comprising NO₂, which, once hydrated, enables a solution of nitric acid to be obtained according to the reactions described above.

Advantageously, said solution of nitric acid obtained in step (d) is a solution comprising nitric acid at a concentration comprised between 0.5 and 68% by weight, preferably between 10% and 68% by weight.

According to one embodiment, the process according to the present invention essentially consists or consists of the above-described steps (a)-(d).

According to another embodiment, in the case where the mixture obtained in step (a) comprises ammoniacal nitrogen (N-NH₄⁺) and nitrite-nitrogen (NO₂⁻) in a ratio by weight (NO₂⁻):(N-NH₄⁺) comprised between 40:60 and 55:45, preferably about 50:50 (i.e. in the case where the efficiency of conversion of ammoniacal nitrogen into nitrite-nitrogen is comprised between 40 and 55% by weight, preferably about 50% by weight of converted ammoniacal nitrogen as previously described), the process according to the present invention further comprises the steps of:
(e) mixing the treated liquid phase obtained in the above-described step (c) with the solution of nitric acid obtained in step (d), and stripping the ammoniacal nitrogen contained in said liquid phase until obtaining a solution of ammonium nitrate;
(f) separating said solution of ammonium nitrate thus obtained from the remaining liquid phase.

For the purposes of the present invention, said step (f) is a step in which the removal and recovery of ammoniacal nitrogen in the form of a solution of ammonium nitrate takes place. In other words, according to the above-described embodiment wherein the process of the present invention comprises steps (a)-(f), the ammoniacal nitrogen initially present in the liquid phase to be treated of step (a) is (removed and) recovered in the form of a solution of ammonium nitrate by mixing the treated liquid phase obtained in step (c) with the solution of nitric acid obtained in the above-described step (d), and stripping the ammoniacal nitrogen contained in said liquid phase. The stripping of step (e) is preferably carried out by blowing air or by means of a membrane selective for ammoniacal nitrogen and, at the same time,
- increasing the pH of the mixture to a value comprised between 8 and 12, preferably comprised between 8.5 and 11, by adding a base, said base being preferably as previously described;
- and/or increasing the temperature of the mixture to a value above 40 °C, preferably comprised between 55 and 70 °C or, alternatively, to a value above 60 °C, preferably comprised between 70 and 90 °C.

Without wishing to be bound to a specific theory, it is possible to observe that the aforesaid stripping, preferably combined with the aforesaid pH and/or temperature conditions, advantageously enables the equilibrium of the ammoniacal nitrogen contained in the treated liquid phase and separated in step (c) to be shifted towards gaseous ammonia (NH₃), which, in the presence of a solution of nitric acid, enables ammonium nitrate to be obtained according to the following reactions:

NH₄⁺ + OH⁻ ←→ NH₃ + H₂O

NH_{3.} + HNO₃ → NH₄NO₃

Advantageously, said solution of ammonium nitrate obtained in step (f) is a solution comprising ammonium nitrate with a nitrogen content comprised between 0.5 and 10% by weight, preferably between 5 and 10% by weight. The liquid phase treated and separated in step (c) is preferably characterised by having a reduced content of nitrogen in the form of ammoniacal nitrogen compared to the initial value before step (a), in a reduction percentage comprised between 55 and 60% by weight, preferably about 50% by weight; said reduction percentage of ammoniacal nitrogen being correlated with the conversion efficiency percentage described above.

Without wishing to be bound to a specific theory, the Applicant has found that the treated liquid phase obtained downstream of step (f) comprises a reduced amount of nitrogen compared both to the initial value before step (a) and the value downstream of step (c), in a total reduction percentage comprised between 45% and 85% by weight; said reduction percentage of ammoniacal nitrogen being correlated with the above-described conversion efficiency percentage of step (a) and a function of the stripping conditions of step (e).

The treated liquid phase obtained downstream of step (f) preferably comprises nitrogen in the form of ammoniacal nitrogen in a concentration typically comprised between 45 and 550 mg(N-NH₄⁺)/L, preferably between 45 and 150 mg(N-NH₄⁺)/L.

According to one embodiment, the process according to the present invention essentially consists or consists of the above-described steps (a)-(f).

The present invention also relates to a plant for carrying out the process according to any one of the embodiments described above.

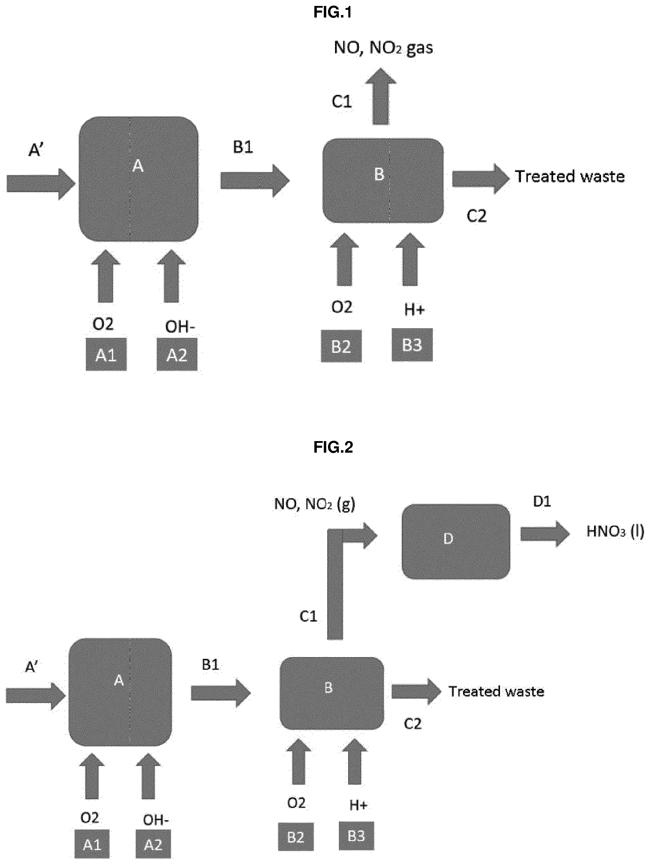

According to a first embodiment, shown in Figure 1, the plant according to the present invention is characterised in that it comprises at least:
1) one reactor (A) for the nitrification treatment adapted to receive a liquid phase containing ammoniacal nitrogen and to operate under aerobic conditions at a concentration of oxygen greater than 0.5 mg/L, and, preferably under pH conditions comprised between 7 and 8.5;
2) a reactor (B) connected with the reactor (A) by means of a line (B1) configured for the acidification of the mixture comprising ammoniacal nitrogen (N-NH₄⁺) and nitrite-nitrogen (NO₂⁻) coming out of the reactor (A); said reactor (B) being connected with a flushing system (B2) configured to flush a gas comprising oxygen into said reactor (B); said reactor (B) preferably being adapted to operate at a temperature comprised between 25 and 35 °C;
3) a line (C1) coming out of the reactor (B) adapted to collect a gaseous phase comprising NO and NO₂ produced by the reactor (B) and a line (C2) coming out of the reactor (B) adapted to collect a treated liquid phase, said liquid phase being separated from said gaseous phase.

Said reactor (A) is a reactor adapted to operate in the presence of activated sludge comprising ammonia-oxidising bacteria (AOB). Said reactor being also definable, for the purposes of the present invention, as a biological reactor.

The plant according to the present invention preferably comprises a line (A') entering said reactor (A) and configured to load said liquid phase containing ammoniacal nitrogen and activated sludge into said reactor.

Said concentration of oxygen is preferably comprised between 0.5 mg/L and 4.0 mg/L, more preferably between 1.0 mg/L and 4.0 mg/L.

The aerobic conditions inside the reactor (A), i.e. the aforesaid oxygen concentration conditions, are preferably monitored by means of at least one sensor that detects the concentration of dissolved oxygen within the liquid phase present inside the reactor (A).

The aforesaid oxygen concentration conditions are maintained at said values by means of a flushing system (A1) connected to said reactor (A) and configured to deliver said gas comprising oxygen into the reactor and/or into said nitrogen-containing liquid phase.

Said gas comprising oxygen is preferably air, preferably air outside the reactor, or pure oxygen.

The reactor (A) is preferably configured to maintain said liquid phase at a temperature comprised between 20 and 35 °C, preferably at a temperature of about 25 °C.

The reactor (A) is preferably configured to be able to maintain the pH of the liquid phase contained therewithin at the aforesaid value comprised between 7 and 8.5, preferably comprised between 7.5 and 8.5. The aforesaid pH conditions are maintained at the aforesaid values by means of a dosing system (A2) connected to said reactor (A) and configured to deliver a base into the reactor (A).

Said base is preferably as described above.

The reactor (B) is preferably configured to acidify the mixture coming out of the reactor (A) and entering the reactor (B) by means of the line (B1) at a pH value comprised between 2 and 4, more preferably about 4.5. The aforesaid pH conditions are achieved by means of a dosing system (B3) connected to said reactor (B) and configured to deliver an acid into the reactor (B).

Said acid is preferably as described above.

According to one embodiment, the plant according to the present invention essentially consists or consists of the above-described components 1) - 3). According to a second embodiment, shown in Figure 2, the plant according to the present invention further comprises:
4) a condenser (D) connected with said line (C1) for the hydration of said gaseous phase comprising NO and NO₂;
5) a line (D1) coming out of said condenser (D) adapted to collect a solution of nitric acid produced in said condenser (D).

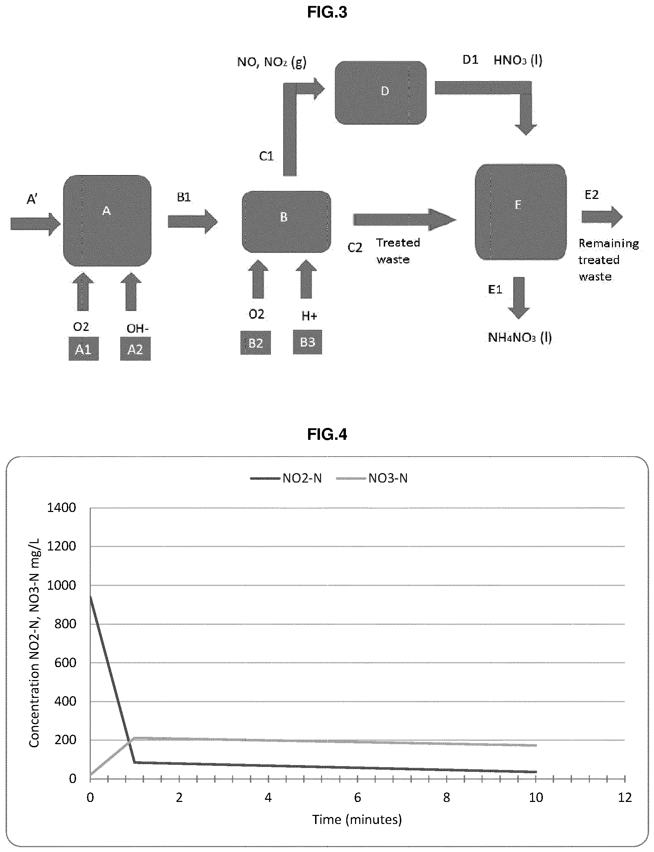

According to a third embodiment, shown in Figure 3, the plant according to the present invention further comprises:
6) a reactor (E) in communication with the line (C2) and with the line (D1) for mixing said liquid phase coming out of the reactor (B) with the solution of nitric acid coming out of the condenser (D), said reactor (E) being a reactor adapted for stripping the ammoniacal nitrogen contained in said liquid phase and separating a solution of ammonium nitrate from a remaining liquid phase; said reactor (E) being configured to operate under conditions of a pH comprised between 8 and 12, preferably comprised between 8.5 and 11 and/or under conditions of a temperature greater than 40 °C, preferably comprised between 55 and 70 °C or, alternatively, under conditions of a temperature greater than 60 °C, preferably comprised between 70 and 90 °C.

Said reactor (E) preferably comprises an outgoing line (E1) adapted to collect the solution of ammonium nitrate produced in the reactor (C) itself and an outgoing line (E2) adapted to collect a remaining treated liquid phase.

Said plant is preferably used in the embodiments wherein the mixture coming out of the reactor (A) comprises ammoniacal nitrogen (N-NH₄⁺) and nitrite-nitrogen (NO₂⁻) in a ratio by weight (NO₂⁻):(N-NH₄⁺) comprised between 40:60 and 55:45, preferably about 50:50 (or, in the case where the efficiency of conversion of ammoniacal nitrogen into nitrite-nitrogen is comprised between 40 and 55% by weight, preferably about 50% by weight of converted ammoniacal nitrogen as previously described).

Said reactor (E) is preferably configured to operate under conditions of a pH comprised between 8.5 and 11 and/or under conditions of a temperature comprised between 55 and 70 °C.

The aforesaid pH conditions are maintained at the aforesaid values preferably by means of a dosing system (E3) (not shown in the figure) connected to said reactor (E) and configured to deliver a base into the reactor (E).

According to one embodiment, the plant according to the present invention essentially consists or consists of the above-described components 1) - 6).

### EXAMPLES

### Experimental tests

The results obtained by applying the invention, in the assumption of applying the configuration as illustrated in Figure 2, are set forth below by way of example.

### Characteristics of the anaerobic digestate

The test was performed using waste with a high load, i.e. anaerobic supernatants produced by anaerobic digestion of sewage sludge. The anaerobic supernatants were characterised by chemical and physical analyses, which are detailed in the table below:

**Table 1**

| Parameter | Unit | Mean (Min Max) |
|---|---|---|
| total COD | mgCOD/L | 1490 (1116-1865) |
| TKN | mgN/L | 1243 (1187-1300) |
| NH4-N | mgN/L | 1110 (1060-1161) |

The waste showed to be very poor as regards COD relative to the concentrations of nitrogen. In fact, 89% of the nitrogen TKN was in a soluble form, i.e. nitrogen in the form of ammonia. On the other hand, the COD/N ratio of about 1.2 gCOD/gN indicates a value that is well below the stoichiometric minimum necessary to allow an efficient removal of nitrogen by heterotrophic denitrification.

### STEP A: Nitritation

The anaerobic supernatant was subjected to the nitritation step A in an SBR reactor with a 28 litre volume, which was only initially inoculated with activated sludge drawn from a municipal sewage treatment plant. The nitritation reactor loaded with the above-described anaerobic supernatant adopts a strategy such as to favour enrichment of the ammonia-oxidising bacteria (AOB); it consists in operating at concentrations of free ammonia greater than 1.5 mg/L in order to wash out the nitrite-oxidising bacteria (NOB) from the reactor (A.C. Anthonisen, R.C. Loehr, T.B.S. Prakasam, E.G. Srinath, Inhibition of Nitrification by Ammonia and Nitrous Acid, J. Water Pollut. Control Fed. 48 (1976) 835-852). In order to maintain the conditions necessary for washing out the NOB, the operating conditions of the nitritation reactor were maintained as shown in table 2.

**Table 2. Nitritation reactor operating conditions maintained during the experiment**

| | | | |
|---|---|---|---|
| Parameter | Acronym | Unit | Mean (minmax) |
| Temperature | T | °C | 26 (25.5-26.6) |
| Solid retention time | SRT | Days | 23 (22-25) |
| Hydraulic retention time | HRT | Days | 0.77 (0.73-0.82) |
| Volumetric nitrogen loading rate | vNLR | kgN/m³ day | 1.61 (1.60-1.62) |
| Number of cycles per day | NC | - | 4.6 (4.5-4.8) |

During the nitritation reaction, the pH was controlled in a range comprised between 7.5 and 8 by automatically adding 30% NaOH (w/v). Such pH conditions are to be considered optimal for the purpose of reaching an efficiency of conversion of ammonia to nitrite comprised between 80% and 90%. The conversion efficiencies are the typical ones in the case of the configurations of the present invention as represented in Figures 1 and 2. Downstream of the nitritation treatment, the forms of nitrogen present in the treated anaerobic supernatant showed the following characteristics (Table 3).

**Table 3: physicochemical characteristics of the nitritation reactor outflow**

| Parameter | Acronym | Unit | Value |
|---|---|---|---|
| Ammonia | NH₄-N | mgN/L | 158 (123-194) |
| Nitrites | NO₂-N | mgN/L | 940 (902-979) |
| Nitrates | NO₃-N | mgN/L | 10.8 (7.9- 13.7) |

The characteristics of the treated supernatant demonstrate that about 99% of the oxidised ammoniacal nitrogen is converted to nitrite, whereas only 1% was oxidised completely to nitrate. The nitritation process would thus enable a treated supernatant to be obtained in which the nitrite compound is accumulated with concentrations comprised between 902 and 979 mgN/L, with a mean value of 940 mgN/L. The concentration of ammoniacal nitrogen in the treated supernatant not converted to any oxidised species, such as nitrite and nitrate, was comprised between 123 and 194 mgN/L with a mean value of 158 mgN/L. These characteristics are thus optimal for the application of "STEP B: stripping and hydration of NO₂ vapours", as described in the previous paragraphs.

### STEP B: stripping and hydration of NO₂ vapours

The supernatant produced in step A as described above was collected in a glass bottle with a 1 litre volume, provided with a stirring system with a magnetic anchor and a system for diffusing the excess oxygen supplied by pumping air by means of a compressor with a nominal flow rate of 6.25 L/min. The pH of the treated anaerobic supernatant was lowered to a value of about 4 by adding 98% sulphuric acid, whilst the temperature was maintained at 25°C. Under these conditions, the initial concentration of FNA at equilibrium was about 211 mgN/L. Aeration of the treated, pre-acidified anaerobic supernatant was maintained for a period of about 60 min. During this period, samples of the supernatant were taken in order to assess the nitrogen compounds NO₂ and NO₃. As may be noted from figure 4, about 78% of the N-NOx (N-NO₂+N-NO₃) were removed and transferred as enriched off-gases of NO₂ and NO.

The off-gases were conveyed into a condensation system and subsequently bubbled in 25 ml of distilled water. Following the test, the supernatant flowing out of process B and the distillate obtained were characterised respectively.

The concentration of ammoniacal nitrogen in the outflow was 135 mgN/L. The distillate obtained was characterized with respect to the parameter pH and nitrate in order to evaluate the concentration in terms of nitric acid. The concentration of N-NO₃⁻ obtained was equal to about 22 gN/L, equivalent to an HNO₃ concentration of 10%.

**Table 4: Characteristics of the distillate obtained**

| Parameter | Acronym | Unit | Value |
|---|---|---|---|
| pH | pH | - | 1,2 |
| Nitrates | N-NO₃⁻ | gN/L | 22 |

On the other hand, the carry-over volume conditions the final concentration of the nitric acid recovered. Further separation processes could further increase the concentration of nitric acid contained in the distillate.

## Claims

1. A process for the removal and recovery of ammoniacal nitrogen from a liquid phase, said process comprising the steps of:
(a) providing a liquid phase containing ammoniacal nitrogen (N-NH₄⁺) and subjecting said liquid phase to a nitrification treatment in the presence of activated sludge comprising ammonia-oxidising bacteria (AOB) until obtaining a mixture comprising ammoniacal nitrogen (N-NH₄⁺) and nitrite-nitrogen (N-NO₂⁻), in a ratio by weight (NO₂⁻):(NH₄⁺) comprised between 40:60 and 95:5, preferably between 50:50 and 85:15;
said treatment being carried out under aerobic conditions, maintaining the concentration of oxygen in said liquid phase at a value greater than 0.5 mg/L, and, preferably, maintaining the pH of said waste at a value comprised between 7 and 8.5 by adding a base,
(b) acidifying, by adding an acid, said mixture comprising ammoniacal nitrogen (N-NH₄⁺) and nitrite-nitrogen (N-NO₂⁻) to a pH comprised between 2 and 5.5 and, simultaneously, flushing said mixture with a gas comprising oxygen, until obtaining a gaseous phase comprising NO and NO₂ according to the reactions:
NO₂- + H⁺ ←→ HNO₂
2HNO₂ → NO₂ + NO + H₂O
(c) separating said gaseous phase from the treated liquid phase, recovering ammoniacal nitrogen in the form of gaseous NO and NO₂ contained in said gaseous phase.

2. The process according to claim 1, wherein said liquid phase containing ammoniacal nitrogen is selected in the group consisting of: waste, liquid waste originating from the treatment of wastewater, sewage sludge, a digestate, an organic fraction deriving from municipal solid waste, an agro-industrial waste material, a landfill leachate, and a combination thereof.

3. The process according to claim **1 or 2,** wherein said activated sludge comprises an autotrophic biomass comprising ammonia-oxidising bacteria (AOB).

4. The process according to any one of the preceding claims, wherein step (c) is carried out at a temperature comprised between 25 and 35 °C.

5. The process according to any one of the preceding claims, further comprising, after step (c), a step of:
(d) subjecting said gaseous phase comprising NO and NO₂ to hydration, in the presence of oxygen, until obtaining a solution of nitric acid, according to the reactions:
3NO₂ + H₂O → 2HNO₃ + NO
2NO + O₂ → 2NO₂

6. The process according to claim **5,** wherein said mixture obtained in step (a) comprises ammoniacal nitrogen (N-NH₄⁺) and nitrite-nitrogen (NO₂⁻) in a ratio by weight (NO₂⁻):(NH₄⁺) comprised between 40:60 and 55:45, preferably about 50:50, and wherein said process further comprises the steps of:
(e) mixing the treated liquid phase obtained in step (c) with the solution of nitric acid obtained in step (d), stripping the ammoniacal nitrogen contained in said liquid phase until obtaining a solution of ammonium nitrate;
(f) separating said solution of ammonium nitrate thus obtained from the remaining liquid phase.

7. The process according to claim **6** wherein, in step (e), the stripping is carried out by blowing air or by means of a membrane selective for ammoniacal nitrogen and, at the same time,
- increasing the pH of the mixture to a value comprised between 8 and 12;
- and/or increasing the temperature to a value above 40 °C or, alternatively, above 60 °C.

8. A plant for carrying out the process according to claims **1-7, characterised in that** it comprises at least:
1) one reactor (A) for the nitrification treatment adapted to receive said liquid phase containing nitrogen and to operate at a concentration of oxygen greater than 0.5 mg/L and, preferably, under conditions of a pH comprised between 7 and 8.5; said reactor (A) being connected to a flushing system (A1) configured to deliver said gas comprising oxygen into the reactor and/or into said liquid phase and preferably being connected to a dosing system (A2) configured to deliver a base into the reactor (A);
2) a reactor (B) connected with the reactor (A) by means of a line (B1) and adapted for the acidification of the mixture comprising ammoniacal nitrogen (N-NH₄⁺) and nitrite-nitrogen (NO₂⁻) coming out of the reactor (A); said reactor (B) being connected with a flushing system (B2) configured to flush a gas comprising oxygen into said reactor (B) and being connected with a dosing system (B3) configured to deliver an acid into the reactor (B); said reactor (B) preferably being adapted to operate at a temperature comprised between 25 and 35 °C;
3) a line (C1) coming out of the reactor (B) adapted to collect a gaseous phase comprising NO and NO₂ produced by the reactor (B) and a line (C2) coming out of the reactor (B) adapted to collect a treated liquid phase separated from said gaseous phase.

9. The plant according to claim **8,** further comprising:
4) a condenser (D) connected with said line (C1) for the hydration of said gaseous phase comprising NO and NO₂;
5) a line (D1) coming out of said condenser (D) adapted to collect the solution of nitric acid produced in said condenser (D) and coming out of the latter.

10. The plant according to claim **9,** further comprising:
6) a reactor (E) in communication with the line (C2) and with the line (D1) for mixing said liquid phase coming out of the reactor (B) with the solution of nitric acid coming out of the condenser (D), said reactor (E) being a reactor adapted for stripping the ammoniacal nitrogen (N-NH₄⁺) contained in said liquid phase and separating a solution of ammonium nitrate coming out of a line (E1) from a remaining treated liquid phase coming out of a line (E2); said reactor (E) being adapted to operate under conditions of a pH comprised between 8 and 12 and/or under conditions of a temperature greater than 40 °C or, alternatively, greater than 60 °C.
